# EUROPÄISCHE PATENTANMELDUNG

(11) **EP 1 227 254 A1**
(43) Veröffentlichungstag der Anmeldung: **31.07.2002**
(21) Anmeldenummer: 01810063.6
(22) Anmeldetag: 24.01.2001
(51) Int. Cl.: F16C 17/04, F16C 17/06, F16C 33/20, F01D 25/16

(54) **Axialgleitlager für einen Generator**

(71) Anmelder: ALSTOM (Switzerland) Ltd, 5401 Baden (CH)
(72) Erfinder: Mahieux, Céline, 5400 Baden (CH)
(74) Vertreter: ABB Patent Attorneys

(57) **Zusammenfassung**

Axialgleitlager (26) für einen, vorzugsweise mittels einer Wasserturbine betreibbaren, Generator (10) mit einer mit der Welle (20) des Rotors (12) mitrotierenden Lagerscheibe (30) und einer feststehenden, an einer Gehäusewand (36) abgestützten Abstützung (32), welche der Lagerscheibe (30) gegenüber angeordnet ist, dadurch gekennzeichnet, dass die Lagerscheibe (30) im wesentlichen aus einer Kunststoffmatrix mit darin eingebetteten Verstärkungsfasern besteht.

## Beschreibung

### Technisches Gebiet

Die Erfindung bezieht sich auf ein Axialgleitlager für einen Generator zur Stromerzeugung gemäss dem Oberbegriff des Patentanspruches 1.

### STAND DER TECHNIK

Bei grossen Generatoren zur Stromerzeugung kommt den Lagern eine Schlüsselstellung zu. Versagt das Lager kommt die auf diesem Generator basierende Stromproduktion zum Stillstand. Neben den Radiallagern für die Welle haben die Axiallager vor allem auch bei vertikal betriebenen Generatoren, wie sie beispielsweise bei der Stromerzeugung mittels Wasserturbinen eingesetzt werden, einer grossen Belastung standzuhalten. Eine sehr elegante, wenn auch energieintensive und daher teuere Möglichkeit, ist die Ausgestaltung des Axiallagers als Magnetlager. Eine andere, weniger energieaufwendige Möglichkeit besteht in der Ausgestaltung als Rollen- oder Wälzlager. Diese Lager sind aber aufgrund ihrer vielen Einzelteile störanfällig und wartungsintensiv. Eine weitere alternative sind Axialgleitlager, bei denen eine Lagerscheibe, die an der Welle des Rotors befestigt ist und mit dieser mitrotiert, die Welle mit dem Rotor axial gegen ein Lagergehäuse abstützt. Das Lagergehäuses weist hierfür an einer der Lagerscheibe zugewandten Gehäusewand eine mit einer besonderen Gleitoberfläche ausgestattete Abstützung, meist in Form sogenannter Pads, auf. Während des Betriebes wird durch einbringen eines geeigneten Schmiermittels zwischen der rotierenden Lagerscheibe und der feststehenden Abstützung ein Schmierfilm aufgebaut, so dass die Lagerscheibe rotierend über die Abstützung gleitet.

Bei grossen Generatoren zur Stromerzeugung kommen Lagerscheiben mit Durchmessern von etwa 2m bis 6m zum Einsatz. Bei den verwendeten hohen Umdrehungszahlen treten entsprechend hohe Temperaturen im Axialgleitlager auf, denen die Lagerscheibe standhalten muss. Die Lagerscheiben für solche Axialgleitlager müssen daher eine hohe Steifigkeit und Festigkeit und auch eine hohe Warmfestigkeit aufweisen. Sie werden daher bisher aus Stahl gefertigt. Damit bei einem partiellen Ausfall der Schmierung des Axialgleitlagers nicht sofort eine Havarie des Lagers auftritt, ist die Abstützung und zum Teil auch die Lagerscheibe mit einem Gleitmaterial wie Weissmetall, oder PTFE beschichtet. Aufgrund des grossen Temperatur-Ausdehnungskoeffizienten von Stahl kommt es aber unter den Hohen Temperaturen im Lager häufig zu einer Verformung der Lagerscheibe (Wölbung der Oberfläche oder Wellenbildung), die ein um so grösseres Problem darstellt je grösser der Durchmesser der Lagerscheibe ist. Bei beschichteten Lagerscheiben führt dies wegen der meist geringeren Ausdehnungskoeffizienten der Beschichtung zu zusätzlichen Problemen. Aber auch bei unbeschichteten Lagerscheiben können aufgrund der nicht vorhersehbaren Verformungen grosse Verschleisserscheinungen im Axiallager auftreten. Die Lebensdauer des gesamten Axiallagers, d.h. je nach Verschleissvorkommnis der Abstützung und/oder der Lagerscheibe, ist daher im Verhältnis zur Labensdauer des Generators begrenzt. Der Wartungsaufwand und die Stillstandszeiten für das Auswechseln einzelner Lagerbestandteile sind entsprechend gross und reduzieren die Wirtschaftlichkeit des Generators. Zudem stellt bei grossen Generatoren, wie sie für die Stromproduktion verwendet werden, das Gewicht der Stahl-Lagerscheiben bereits beim Antransport und der Montage vor Ort oft ebenfalls ein Problem dar.

### DARSTELLUNG DER ERFINDUNG

Aufgabe der Erfindung ist es daher ein Axialgleitlager der eingangs genannten Art zur Verfügung zu stellen, dessen Lebensdauer höher ist und dessen Montage einfacher ist, so dass der Generator in Montage und Betrieb wirtschaftlicher ist.

Diese Aufgabe löst ein Axialgleitlager mit den Merkmalen des Patentanspruches 1. Ein Axialgleitlager, dessen Lagerscheibe im wesentlichen aus einem faserverstärkten Kunststoff besteht, weist eine höhere Labensdauer auf, weil der faserverstärkte Kunststoff einen geringeren Ausdehnungskoeffizient aufweist als Stahl und sich die Lagerscheibe daher kaum verformt. Der Verschleiss der durch unvorhersehbare Verformungen der Stahl-Lagerscheiben auftritt kann verhindert werden. Da die Lagerscheibe aus faserverstärktem Kunststoff ein viel geringeres Gewicht hat als eine solche aus Stahl sind Antransport und Montage viel einfacher und kostengünstiger durchzuführen.

Sehr günstig ist es, einen faserverstärkten Kunststoff mit kontinuierlichen Fasern zu verwenden, da so günstige Steifigkeitswerte und ein geringer Ausdehnungskoeffizient erreicht werden.

Wird die Lagerscheibe als Laminat aus wenigstens zwei Schichten faserverstärkten Kunststoffs mit jeweils unidirektional ausgerichteten Fasern gefertigt und liegen die Winkel der Faserausrichtung der Schichten zwischen 0° und 90° so werden die positiven, fasergebundenen Eigenschaften wie z.B. die Wärmeausdehnung durch die unidirektionale Ausrichtung in jeder Schicht genutzt, ohne dass die Lagerscheibe als ganzes schliesslich richtungsabhängige Eigenschaften aufweist.

Wird als Kunststoffmatrix eine Epoxidmatrix gewählt, so ist eine vorzügliche Warmfestigkeit gewährleistet.

Sehr vorteilhaft ist es, wenn als Verstärkungsfasern Kohlefasern eingesetzt werden, da Kohlefasern eine hohe Härte gewährleisten. Die Härte der Lagerscheibe wird Vorteilhaft höher gewählt als die der Stützen. Sollte es aus irgendwelchen Gründen, z.B. bei einem partiellen Ausfall des Schmierfilmes, zu einem Streifen der Lagerscheibe an der Abstützung kommen, so verhindert die höhere Härte der Lagerscheibe eine Beschädigung der Lagerscheibe. Statt dessen wird nur die wesentlich einwacher und kostengünstiger auswechselbare Abstützung beschädigt.

Je nach Anforderungen des jeweiligen Axiallagers ist ein Faseranteil von 50%-vol. bis 70%vol. in der Lagerscheibe sehr vorteilhaft.

Besonders Vorteilhaft ist es wenn nicht nur die Lagerscheibe sondern auch ein die Lagerscheibe mit der Welle verbindender Lagerscheibenträger aus dem faserverstärkten Kunststoff gefertigt ist. Dadurch kann weiter Gewicht eingespart und eine unterschiedliche Wärmeausdehnung zwischen Lagerscheibe und Lagerscheibenträger vermieden werden.

Weitere bevorzugte Ausführungsformen sind Gegenstand weiterer abhängiger Patentansprüche.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: in Seitenansicht ein Axialgleitlager mit einer erfindungsgemässen Lagerscheibe;
- Fig. 2: einen Schnitt durch eine erfindungsgemässe Lagerscheibe

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### WEGE ZUR AUSFÜHRUNG DER ERFINDUNG

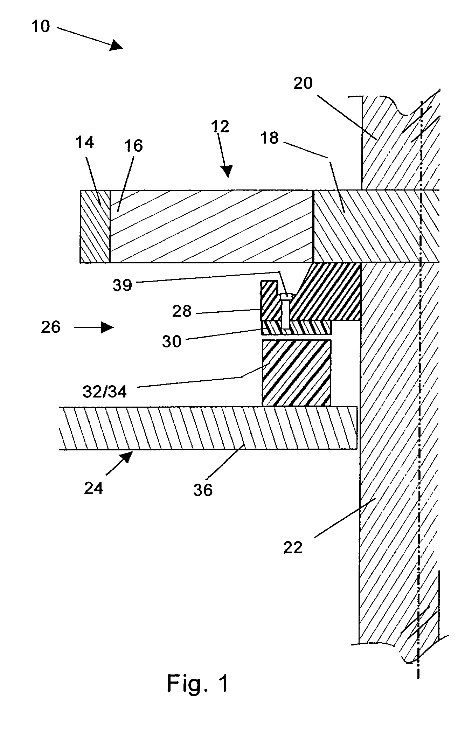

Figur 1 zeigt schematisch einen Ausschnitt eines vertikal ausgerichteten, mittels einer Wasserturbine, die nicht dargestelt ist, betriebenen Generators 10. Dargestellt ist ein scheibenförmiger Rotor 12 mit Wicklungen 14 am Rande 16 des Rotors 12. Der Rotor 12 ist mit Hilfe eines Verbindungselementes 18 an einer Welle 20 des Generators 10 befestigt. Das Verbindungselement 18 verbindet zugleich die Welle 20 des Generator 10 mit einer Welle 22 der nichtdargestellten Turbine. Die Welle 22 der Turbine ist radial in einem Lagergehäuse 24 gelagert. Zwischen dem Lagergehäuse 24 und dem Rotor 12 ist ein Axialgleitlager 26 für die Welle 20 und den Rotor 12 des Generators 10 angeordnet. Das Axialgleitlager 26 umfasst eine mittels eines Lagerscheibenträgers 28 mit der Welle 20 des Generators 10 fest verbundene Lagerscheibe 30 aus faserverstärktem Kunststoff. Weiter umfasst das Axialgleitlager 26 als Abstützung 32 für die Lagerscheibe 30 an einer Gehäusewand 36 sogenannte Pads, die gegenüber von der Lagerscheibe 30 an der Gehäusewand 36 Lagergehäuses 24 fixiert sind. Das Axialgleitlager 26 wird mit Hilfe von gereinigtem Schmieröl betrieben, das während des Betriebes zwischen der Lagerscheibe 30 und den Pads 34 einen Schmierölfilm aufbaut. In dem Hier gezeigten Beispiel ist der Lagerscheibenträger 28 aus dem gleichen faserverstärkten Kunststoff gefertigt wie die Lagerscheibe 30. Die Lagerscheibe 30 und der Lagerscheibenträger 28 sind mittels Schrauben 39 lösbar miteinander verbunden.

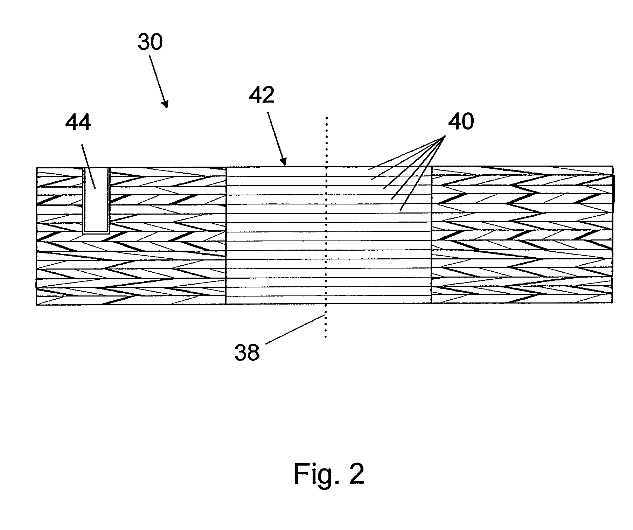

Fig. 2 zeigt eine bevorzugte Ausführungsform der Lagerscheibe 30 aus faserverstärktem Kunststoff im Schnitt entlang der Rotationsachse 38. Die Lagerscheibe ist als Laminat aus mehreren Schichten 40 faserverstärkten Kunststoffs hergestellt, wobei die Fasern kontinuierliche Kohlenstofffasern mit unidirektionaler Ausrichtung in jeder Schicht 40 sind. Die Kohlenstofffasern sind in eine Epoxidmatrix eingebettet. Der Winkel der Ausrichtung der Kohlenstofffasern ändert sich von Schicht 40 zu Schicht 40. Die Winkelfolge ist: [[0, -45, 45, 60°, 90]_{symmetric}]ₙ und ist mehrmals wiederholt (Index "n") um die nötige Dicke der Lagescheibe 30 zu erhalten. Bei einem Aussendurchmesser von etwa 5m beträgt die Dicke der Lagescheibe etwa 200mm. Der Anteil Kohlenstofffasern am Gesamtvolumen beträgt etwa 60%-vol.. Die Härte der Lagerscheibe 30 liegt damit etwa bei 1200 MPa und damit weit höher als diejenige von Weissmetall (350MPa) oder PTFE (90MPa), mit welchem die Pads 34 beschichtet sind.

Die Lagerscheibe kann einfach und günstig z.B. durch Pressverschweissen von vorgefertigten Prepregs hergestellt werden. Eine für die Durchführung der Welle 20 durch die Lagerscheibe nötige Öffnung 42 in der Mitte der Lagerscheibe 30 und gegebenenfalls nötige Gewindelöcher 44 für Schrauben 39 können leicht durch Bohren oder Drehen erzeugt werden. Ebenso können allenfalls nötige Strukturen in der Oberfläche Lagerscheibe 30 für eine bessere Schmiermittelverteilung leicht durch Fräsen in die Oberfläche eingearbeitet werden.

Je nach den Anforderungen des Axialgleitlagers können auch andere Anteile an Kunststofffasern im Bereich von 50%-vol. bis 70%-vol. oder eventuell auch Glasfasern oder Polyamidfasern gewählt werden. Statt einer Epoxidmatrix können auch andere thermisch resistente Kunststoffe gewählt werden, wie Beispielsweise Rhodeftal Polyaminoimid (von Vantico). Wo dies nötig erscheint kann zusätzlich noch eine Beschichtung auf die Lagerscheibe aufgebracht werden, die wegen der besseren Haftungseigenschaften vorzugsweise ebenfalls eine Kunststoffbeschichtung sein sollte.

### BEZUGSZEICHENLISTE

- 10: Generator
- 12: Rotor
- 14: Wicklung
- 16: Rand
- 18: Verbindungselement
- 20: Welle des Rotors
- 22: Welle der Turbine
- 24: Lagergehäuse
- 26: Axialgleitlager
- 28: Lagerscheibenträger
- 30: Lagerscheibe
- 32: Abstützung
- 34: Pad
- 36: Gehäusewand
- 38: Rotationsachse
- 39: Schraube
- 40: Schicht
- 42: Öffnung
- 44: Gewindeloch

## Patentansprüche

1. Axialgleitlager für einen, vorzugsweise mittels einer Wasserturbine betreibbaren, Generator (10) mit einer mit der Welle (20) des Rotors (12) mitrotierenden Lagerscheibe (30) und einer feststehenden, dem Rotor (12) gegenüber angeordneten und an einer Gehäusewand (36) abgestützten Abstützung (32), **dadurch gekennzeichnet, dass** die Lagerscheibe (30) im wesentlichen aus einer Kunststoffmatrix mit darin eingebetteten Verstärkungsfasern besteht.

2. Axialgleitlager nach Anspruch 1, **dadurch gekennzeichnet, dass** kontinuierliche Fasern in der Kunststoffmatrix eingebettet sind.

3. Axialgleitlager nach Anspruch 2, **dadurch gekennzeichnet, dass** die Kunststoffmatrix eine Epoxidmatrix ist.

4. Axialgleitlager nach einem der Ansprüche 1 bis 3, **dadurch gekennzeichnet, dass** die Verstärkungsfasern Kohlefasem sind.

5. Axialgleitlager nach einem der Ansprüche 1 bis 4, **dadurch gekennzeichnet, dass** der Faseranteil in der Matrix zwischen 50%-vol. und 70%-vol. beträgt.

6. Axialgleitlager nach einem der Ansprüche 1 bis 5, **dadurch gekennzeichnet, dass** die Lagerscheibe (30) als Laminat aus wenigstens zwei Schichten (40) faserverstärkten Kunststoffes besteht, wobei die Fasern in jeder Schicht (40) unidirektional ausgerichtet sind und der Winkel der Faserausrichtung der Schichten zwischen 0° und 90° liegt.

7. Axialgleitlager nach Anspruch 6, **dadurch gekennzeichnet, dass** die Schichten (40) des Laminats eine Winkelfolge [[0, -45, 45, 60°, 90]_{symmetric}]ₙ aufweisen.

8. Axialgleitlager nach einem der Ansprüche 1 bis 7, **dadurch gekennzeichnet, dass** die Härte der Lagerscheibe (30) grösser ist als die Härte der Abstützung (32).

9. Axialgleitlager nach einem der Ansprüche 1 bis 8, **dadurch gekennzeichnet, dass** auch ein die Lagerscheibe (30) mit der Welle (20) verbindender Lagerscheibenträger (28) aus faserverstärktem Kunststoff besteht.
